# EUROPEAN PATENT APPLICATION

(11) **EP 1 758 363 A2**
(43) Date of publication of application: **28.02.2007**
(21) Application number: 06118902.3
(22) Date of filing: 14.08.2006
(51) Int. Cl.: H04N 1/00, G06K 15/00

(54) **Method And Apparatus For Managing History In Image Forming Apparatus**

(30) Priority: 25.08.2005 KR 20050078424
(71) Applicant: Samsung Electronics Co., Ltd., Suwon-si, Gyeonggi-Do (KR)
(72) Inventor: Lee, Hyun-suk, Yeongtong-gu Suwon-si Gyeonggi-do (KR)
(74) Representative: Perkins, Dawn Elizabeth

(57) **Abstract**

A method and apparatus for managing a history of operations performed in an image forming apparatus that is controlled by an external connection are provided. The apparatus includes an interface unit via which an external device is connected to the image forming apparatus to control the image forming apparatus, a storage unit that stores a history obtained by controlling the image forming apparatus by the external device, and a controller that controls the history in the storage unit. Accordingly, it is possible to allow the external device to be connected to the image forming apparatus to control the image forming apparatus, and store the history of the control in the storage unit. Accordingly, a user can review operations that were performed by the image forming apparatus under the control of the external device, and determine whether important information was disclosed or whether unnecessary operations had been performed, thereby managing the image forming apparatus.

## Description

The present invention relates to a method and apparatus for managing a history of operations in an image forming apparatus.

When a device accesses a conventional remote control system to request a diagnosis, the conventional remote control system controls the device to perform a diagnosis without generating a log (history information) or a history of operations performed under the control of the remove control system.

Thus, in an image forming apparatus that operates under the control of a conventional remote control system, it is difficult to determine what operations were performed by the image forming apparatus. Accordingly, a user is not able to determine whether unnecessary operations were performed and whether important data was accessed or disclosed.

Accordingly, there is a need for an improved method and apparatus for managing a history of operations performed by a remote control system.

An aspect of the present invention is to address at least the above problems and/or disadvantages and to provide at least the advantages described below. Accordingly, an aspect of the present invention is to provide a method and apparatus for allowing an external device to be connected to an image forming apparatus to control the image forming apparatus, and storing a history performed by the image forming apparatus in a storage unit so that the stored history can be read and managed.

According to an aspect of the present invention, an apparatus for managing a history in an image forming apparatus that is connected to and controlled externally is provided. The apparatus includes an interface unit via which an external device is connected to the image forming apparatus, a storage unit to store the history of operations performed by the image forming apparatus under the control of the external device, and a controller to control the storage unit to store the history.

The apparatus may further include a display unit to display the history, and the controller may control the history stored in the storage unit to be displayed on the display unit.

When the external device is connected to the image forming apparatus via the interface unit, the controller may inform a user that the external device requests control of the image forming apparatus via the display unit.

When a manager is connected to the image forming apparatus via the interface unit and controls the image forming apparatus, the controller may control the storage unit to store the history of operations performed by the image forming apparatus under the control of the manager.

The history may include a plurality of fields, such as a control date field, an access method field, an operation field, an accessed data field, a connection method field, and an accessed address field.

The storage unit may be a flash memory or a hard disc.

When the storage unit is a flash memory, the history may be stored at a predetermined location of the flash memory. When the storage unit is a hard disc, a file may be generated to store the history.

The display unit may display the history on a display window, print the history using a printing unit, or transmit the history by e-mail via the interface unit.

According to another aspect of the present invention, a method of managing a history of operations in an image forming apparatus that is controlled externally includes the steps of (a) receiving an external connection to the image forming apparatus, (b) performing operations in the image forming apparatus under the control of the external connection, and (c) storing a history of the operations performed under the control of the external connection to the image forming apparatus.

The method may further include the step of (d) displaying the history on a display unit.

After step (a), the method may further include the steps of (a1) determining whether an external device or a manager is connected to the image forming apparatus, and (a2) setting an external device mode or a manager mode according to the result of the determination.

After step (a), when one of the external device and the manager is connected to the image forming apparatus, the method may further include informing a user that one of the external device and the manager requests control of the image forming apparatus.

The history may comprise a plurality of fields, such as a control date field, an access method field, an operation field, an accessed data field, a connection method field, and an accessed address field.

The storage unit may be a flash memory or a hard disc.

The storage unit may be a flash memory or a hard disc.

When the storage unit is a flash memory, the history may be stored at a predetermined location of the flash memory. When the storage unit is a hard disc, a file may be generated to store the history.

The display unit may display the history on a display window, print the history using a printing unit, or transmit the history by e-mail via the interface unit.

According to another aspect of the present invention, a method of managing a history in an image forming apparatus includes the steps of determining whether an external device is connected to the image forming apparatus, performing operations in the image forming apparatus under the control of the external device, if an external device is connected to the image forming apparatus, and storing a history of operations performed under the control of the external device.

The method may also include the step of displaying the history on a display unit.

The method may also include the step of setting an external device mode, if an external device is connected to the image forming apparatus.

The method may also include the steps of determining whether a manager is connected to the image forming apparatus, and setting a manager mode, if a manager is connected to the image forming apparatus.

The above and other objects, features, and advantages of certain exemplary embodiments of the present invention will be more apparent from the following description taken in conjunction with the accompanying drawings, in which:
Figure 1 is a block diagram of an apparatus for managing a history of operations in an image forming apparatus that is externally controlled, according to an exemplary embodiment of the present invention;
Figure 2 illustrates the structure of a history of operations to be displayed or output, according to an exemplary embodiment of the present invention; and
Figure 3 is a flowchart illustrating a method of managing a history of operations in an image forming apparatus that is externally controlled, according to an exemplary embodiment of the present invention.

Throughout the drawings, the same reference numerals will be understood to refer to the same elements, features, and structures.

The matters defined in the description such as a detailed construction and elements are provided to assist in a comprehensive understanding of the exemplary embodiments of the invention and are merely exemplary. Accordingly, those of ordinary skill in the art will recognize that various changes and modifications of the exemplary embodiments described herein can be made without departing from the scope and spirit of the invention. Also, descriptions of well-known functions and constructions are omitted for clarity and conciseness.

Hereinafter, exemplary embodiments of the present invention will be described in detail with reference to the accompanying drawings.

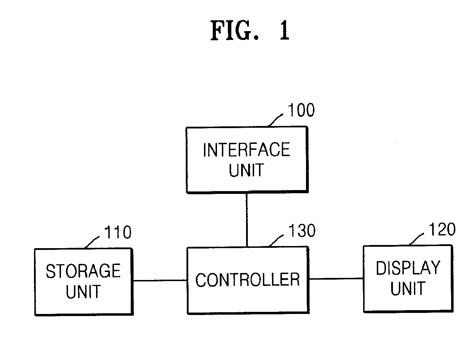

Figure 1 is a block diagram of an apparatus for managing a history of operations in an image forming apparatus that is controlled externally, according to an exemplary embodiment of the present invention. Referring to Figure 1, the apparatus includes an interface unit 100, a storage unit 110, a display unit 120, and a controller 130.

The interface unit 100 acts as an input/output device that allows an external device to be connected to the image forming apparatus to control the image forming apparatus. The image forming apparatus may be a printer, a multifunctional device, a facsimile, a copier, etc. A multifunctional device typically has printer, scanner, and facsimile functions. The interface unit 100 connects the image forming apparatus to the external device.

The storage unit 110 stores a history of operation performed by the image forming apparatus under the control of the external device. The storage unit 110 may also temporarily store data to be printed or scanned in the image forming apparatus.

The storage unit 110 may be a flash memory or a hard disc. When the storage unit 110 is a flash memory, the history data is stored at a predetermined location of the flash memory. When the storage unit 110 is a hard disc, a file is generated to store the history.

The display unit 120 displays the history. The display unit 120 may display the history on a display window. Also, the display unit 120 may print the history using a printing unit (not shown) or transmit the history using e-mail via the interface unit 100.

The controller 130 controls the storage unit 110 to store the history, and the stored history to be displayed on the display unit 120.

Also, the controller 130 informs a user that the external device requests control of the image forming apparatus using the display unit 120 when the external device is connected to the image forming apparatus via the interface unit 100.

The controller 130 sets a manager mode when a manager is connected to the image forming apparatus via the interface unit 100 to control the image forming apparatus, and stores a history of the operations performed under the control of the manager, in the storage unit 110 after the manager controls the image forming apparatus.

The history includes a plurality of fields, and may include a control date field, an access method field, an operation field, an accessed data field, a connection method field, and an accessed address field.

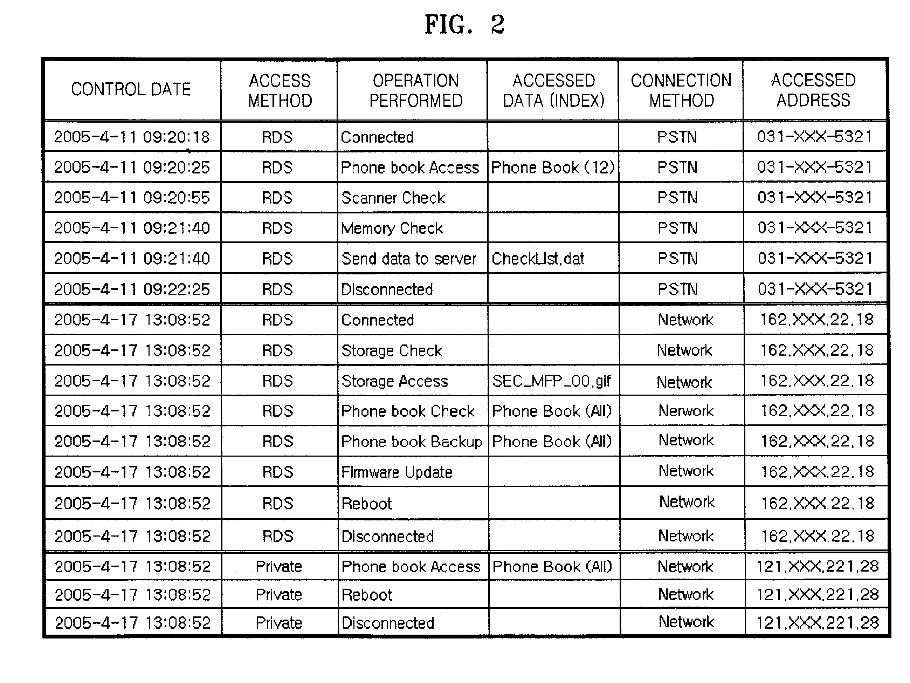

Figure 2 illustrates the structure of a history to be displayed or output, according to an exemplary embodiment of the present invention. Referring to Figure 2, the history includes, for example, a control date field, an access method field, an operation field, an accessed data field, a connection method field, and an accessed address field. The control date field records the time, date, month, and year when an image forming apparatus is externally controlled, and diagnosed. The access method field indicates whether the image forming apparatus is externally connected to a RDS (remote diagnostic server) or a manager. The operation field indicates the type of operation performed, for example, a connecting or disconnecting operation, a phone book access, a scanner check, a memory check, transmission of data to a server, a storage check, and the like. The access data field indicates the type of data accessed, such as phone book data or a check list (CheckList.dat), when an operation that accessed data is performed. The connection method field indicates whether the image forming apparatus is externally connected via a public switched telephone network (PSTN) or a network, for example. The accessed address field records a telephone number when the image forming apparatus is connected via the PSTN, and an Internet protocol (IP) address when the image forming apparatus is accessed via the network.

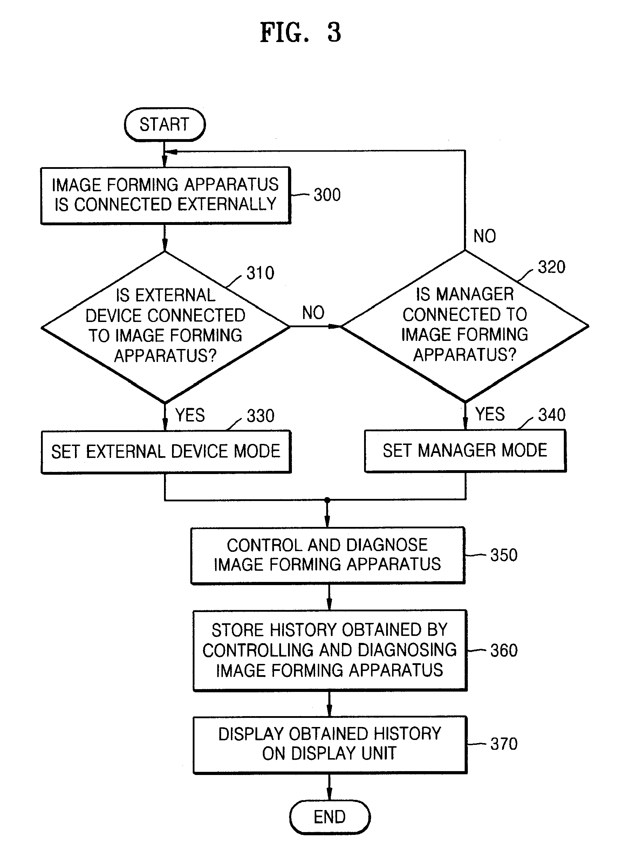

Figure 3 is a flowchart illustrating a method of managing a history in an image forming apparatus that is controlled externally, according to an exemplary embodiment of the present invention. The method of Figure 3 will now be described with reference to Figure 1.

Referring to Figures 1 and 3, an external device is connected to the image forming apparatus via the interface unit 100 of the image forming apparatus (operation 300). The controller determines whether a request for connection to the image forming apparatus is received from an external device via the interface unit 100 (operation 310). At this time, the controller may operate the display unit 120 to inform a user that an external device or a manager is connected to the image forming apparatus.

When the external device is connected to the image forming apparatus, an external device mode is set (operation 330), and the image forming apparatus is controlled according to the set mode (operation 350). If the controller determines that an external device is not connected to the image forming apparatus, the controller then determines whether a manager is connected to the image forming apparatus (operation 320). When it is determined that the manager is connected to the image forming apparatus, a manager mode is set (operation 340), and then, the image forming apparatus is controlled according to the set mode (operation 350).

After operation 350, the history of operations is stored in the storage unit 110 (operation 360). The history may include different fields, as discussed above. After operation 360, the history may be displayed on the display unit 120 when a user desires to read or manage the history stored in the storage unit 110 (operation 370).

Alternatively, in operation 370, the history may be printed using a printing unit or transmitted by e-mail.

As described above, according to the exemplary embodiments of the present invention, an external device may be connected to the image forming apparatus to control the image forming apparatus, and the history of operations performed under the control of the external device may be stored in a storage unit. Accordingly, a user may review operations that were performed by the external device, and determine whether important information was disclosed or whether unnecessary operations had been performed, thereby managing the image forming apparatus.

The present invention may be embodied as a program that can be executed in a computer. The present invention may be realized by executing the program in a general digital computer using a computer readable medium. The computer readable medium may be any recording apparatus capable of storing data for retrieval by a computer system. Examples of computer readable medium include electronic storage mediums, such as read-only memory (ROM) and random-access memory (RAM), magnetic storage media such as floppy discs and hard discs, optical storage media such as digital versatile discs (DVDs) and compact discs CD-ROMs, and carrier waves that transmit data via the Internet.

While the invention has been shown and described with reference to certain exemplary embodiments thereof, it will be understood by those skilled in the art that various changes in form and details may be made therein without departing from the spirit and scope of the invention as defined by the appended claims.

## Claims

1. An apparatus for managing a history in an image forming apparatus that is connected and controlled externally, comprising:
an interface unit (100) for connecting an external device to the image forming apparatus;
a storage unit (110) for storing a history of operations performed by the image forming apparatus under the control of the external device; and
a controller (130) for storing the history in the storage unit.

2. The apparatus of claim 1, further comprising a display unit (120) for displaying the history.

3. The apparatus of claim 2, wherein the controller (130) controls the history stored in the storage unit (110) to be displayed on the display unit (120).

4. The apparatus of claim 2 or 3, wherein, when the external device is connected to the image forming apparatus via the interface unit (100), the controller (130) informs a user via the display unit (120) that the external device requests control of the image forming apparatus..

5. The apparatus of any one of the preceding claims, wherein, when a manager is connected to the image forming apparatus via the interface unit (100) and controls the image forming apparatus, the controller (130) controls the storage unit (110) to store the history of operations performed by the image forming apparatus under the control of the manager.

6. The apparatus of any one of the preceding claims, wherein the history comprises a plurality of fields.

7. The apparatus of claim 6, wherein the plurality of fields comprise a control data field, an access method field, an operation field, an accessed data field, a connection method field, and an accessed address field.

8. The apparatus of any one of the preceding claims, wherein the storage unit (110) is one of a flash memory or a hard disc.

9. The apparatus of claim 8, wherein the storage unit (110) comprises a flash memory and the history is stored in a predetermined location of the flash memory.

10. The apparatus of claim 8, wherein the storage unit (110) comprises a hard disc and a file is generated to store the history.

11. The apparatus of any one of claims 2 to 4, wherein the display unit (120) displays the history on a display window, prints the history using a printing unit, or transmits the history by e-mail via the interface unit (100).

12. A method of managing a history in an externally controlled image forming apparatus, comprising the steps of:
(a) receiving an external connection to the image forming apparatus;
(b) performing operations in the image forming apparatus under the control of the external connection; and
(c) storing a history of the operations performed under the control of the external connection to the image forming apparatus.

13. The method of claim 12, further comprising the step of (d) displaying the history on a display unit (120).

14. The method of claim 12 or 13, further comprising the steps of, after step (a):
(a1) determining whether an external device or a manager is connected to the image forming apparatus; and
(a2) setting an external device mode or a manager mode according to the determining result.

15. The method of claim 14, further comprising the step of, after step (a1), informing a user that one of the external device or the manager requests a control of the image forming apparatus.

16. The method of any one of claims 12 to 15, wherein the history comprises a plurality of fields.

17. The method of claim 16, wherein the plurality of fields comprise a control data field, an access method field, an operation field, an accessed data field, a connection method field, and an accessed address field.

18. The method of any one of claims 12 to 17, wherein the history is stored in a flash memory.

19. The method of any one of claims 12 to 17, wherein the history is stored as a file in on a hard disc.

20. The method of claim 12, further comprising the step (d) of displaying the history on a display window, printing the history using a printing unit, or transmitting the history by e-mail.

21. A computer readable recording medium having stored thereon a program which, when run on a computer, causes the computer to carry out the method according to any one of claims 12 to 20.

22. A method of managing a history in an image forming apparatus, comprising the steps of:
(a) determining whether an external device is connected to the image forming apparatus;
(b) performing operations in the image forming apparatus under the control of the external device, if an external device is connected to the image forming apparatus; and
(c) storing a history of operations performed under the control of the external device.

23. The method of claim 22, further comprising the step of:
(d) displaying the history on a display unit (120).

24. The method of claim 22 or 23, further comprising the step of:
(a1) setting an external device mode, if an external device is connected to the image forming apparatus.

25. The method of claim 24, further comprising the steps of:
(a2) determining whether a manager is connected to the image forming apparatus; and
(a3) setting a manager mode, if a manager is connected to the image forming apparatus.
